(19) Europäisches Patentamt / European Patent Office / Office européen des brevets

(11) **EP 2 952 829 B1**

(12) **EUROPEAN PATENT SPECIFICATION**

(45) Date of publication and mention
of the grant of the patent:
**09.09.2020 Bulletin 2020/37**

(51) Int Cl.:
*F25B 1/00* *(2006.01)*    *F25B 13/00* *(2006.01)*
*F25B 49/02* *(2006.01)*

(21) Application number: **13873980.0**

(22) Date of filing: **31.01.2013**

(86) International application number:
**PCT/JP2013/052241**

(87) International publication number:
**WO 2014/118952 (07.08.2014 Gazette 2014/32)**

(54) **REFRIGERATION-CYCLE DEVICE AND METHOD FOR CONTROLLING REFRIGERATION-CYCLE DEVICE**

KÜHLMITTELKREISLAUFVORRICHTUNG UND VERFAHREN ZUR STEUERUNG DER KÜHLMITTELKREISLAUFVORRICHTUNG

DISPOSITIF À CYCLE FRIGORIFIQUE ET PROCÉDÉ DE CONTRÔLE DU DISPOSITIF À CYCLE FRIGORIFIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.12.2015 Bulletin 2015/50**

(73) Proprietor: **Mitsubishi Electric Corporation Tokyo 100-8310 (JP)**

(72) Inventors:
 • **TANAKA, Kosuke**
   **Tokyo 100-8310 (JP)**
 • **MATSUI, Ryosuke**
   **Tokyo 100-8310 (JP)**
 • **MAKINO, Hiroaki**
   **Tokyo 100-8310 (JP)**
 • **SAKABE, Akinori**
   **Tokyo 100-8310 (JP)**

(74) Representative: **Mewburn Ellis LLP**
   **Aurora Building**
   **Counterslip**
   **Bristol BS1 6BX (GB)**

(56) References cited:
JP-A- H1 038 388      JP-A- H05 272 822
JP-A- 2001 304 699    JP-A- 2001 304 699
JP-A- 2003 106 683    JP-A- 2003 106 683
JP-A- 2005 016 946    JP-A- 2012 127 631
JP-B2- 2 921 254

## Description

Technical Field

The present invention relates to a refrigeration cycle apparatus for circulating refrigerant through a circuit in which a compressor, a condensor, an expansion valve, and an evaporator are connected to each other by pipes, and a method of controlling a refrigeration cycle apparatus.

Background Art

In a related-art refrigeration cycle apparatus, there has been proposed one having a structure in which, for example, an opening degree of an expansion valve during startup of a heating operation is set to a pre-set startup opening degree, and when a low-pressure refrigerant pressure is a predetermined pressure or more, the opening degree of the expansion valve is set to be decreased to less than that of the startup opening degree, and when the low-pressure refrigerant pressure is less than the predetermined pressure, the opening degree of the expansion valve is set to be increased (e.g., see Patent Literature 1).

Further, there has also been proposed one having a structure in which, during startup operation, the opening degree of the expansion valve is increased when refrigerant flowing into an evaporator is determined to be in a superheated gaseous state (e.g., see Patent Literature 2).

In addition, there has also been proposed one having a structure in which changes in a discharge pipe temperature of a compressor are monitored, and the opening degree of the expansion valve for the next startup is set by learning the opening degree of the expansion valve based on the changes in the discharge pipe temperature (e.g., see Patent Literature 3).

Still further, there has also been proposed one having a structure in which the opening degree of the expansion valve is controlled to be adjusted in steps based on an outside air temperature condition to reach a set opening degree that matches a frequency set to the compressor (e.g., see Patent Literature 4). Japanese Unexamined Patent Application Publication No JP 2003 106683 A discloses a refrigeration cycle apparatus according to the preamble of claim 1.

Citation List

Patent Literature

Patent Literature 1: Japanese Patent No. 3208923 (paragraphs [0016] and [0017])
Patent Literature 2: Japanese Patent No. 5022920 (paragraph [0005])
Patent Literature 3: Japanese Unexamined Patent Application Publication No. Hei 11-153366 (paragraph [0008])
Patent Literature 4: Japanese Unexamined Patent Application Publication No. 2000-337717 (paragraph [0010])

Summary of Invention

Technical Problem

When operation of the refrigeration cycle apparatus is started under an environmental condition in which the outside air temperature is low, because the refrigerant has turned into a liquid state and accumulated in devices (such as an evaporator and accumulator) in an outdoor unit while operation was stopped, the refrigerant flowing into the expansion valve during startup turns into a two-phase gas-liquid phase, causing the refrigerant density to decrease. As a result, during operation immediately after startup, the refrigerant pressure on the low-pressure side decreases, causing a problem in the circulation of refrigerating machine oil.

Further, when operation of the refrigeration cycle apparatus is started under an environmental condition in which the outside air temperature is high, operation is under a high compression ratio, and hence the discharge temperature at the compressor during startup tends to increase excessively. When the discharge temperature increases excessively, the refrigerating machine oil deteriorates, and the heat resistance of a compressor coil deteriorates.

In the related art, a large startup opening degree is set for the expansion valve, and after a predetermined period of time has elapsed that allows subcooling (SC) on an inlet side of the expansion valve to be achieved, normal controls, namely, discharge temperature control and indoor unit SC control, are started.

However, depending on changes in the environmental conditions, such as when the outside air temperature is different from that expected, changes in the operating capacity of the compressor, or other changes, there has been a problem with liquid flowing back into the compressor. As a result, there has been a problem in that operating efficiency and device reliability deteriorate.

Further, conversely, when the startup opening degree is too small, there has been a problem in that the refrigerant pressure on the low-pressure side decreases, and the discharge temperature (Td) at the compressor increases excessively, causing operating efficiency and device reliability to deteriorate. In particular, this problem is noticeable for the refrigerant R32, which is a refrigerant having a low global warming potential (GWP), with the discharge temperature (Td) tending to increase by about 15 K to 30 K more than that of the currently used refrigerant R410A.

In the technologies disclosed in Patent Literatures 1 to 4, no consideration is given to an effect on the refrigerant pressure on a high-pressure side or on the discharge temperature resulting from the opening degree control of the expansion valve. As a result, depending on the environmental conditions, there has been a problem in that the discharge temperature of the compressor increases excessively, causing operating efficiency and device reliability to deteriorate.

Further, in the technology disclosed in Patent Literature 2, there has been a problem in that control response is slow due to a response lag caused by performing the opening degree control of the expansion valve after the determination that the refrigerant flowing into the evaporator is in a superheated gaseous state. In addition, in the technology disclosed in Patent Literature 3, there has been a problem in that control response is slow because the opening degree of the expansion valve for the next startup needs to be learned.

The present invention has been made to solve the above-mentioned problems. An object of the present invention is to provide a refrigeration cycle apparatus and a method of controlling a refrigeration cycle apparatus that are capable of setting an appropriate opening degree of an expansion valve based on environmental conditions and an operating capacity of a compressor.

Further, an object of the present invention is to provide a refrigeration cycle apparatus and a method of controlling a refrigeration cycle apparatus that are capable of improving operating efficiency by suppressing a decrease in a refrigerant pressure on a low-pressure side under an environmental condition in which an outside air temperature is low.

In addition, an object of the present invention is to provide a refrigeration cycle apparatus and a method of controlling a refrigeration cycle apparatus that are capable of improving device reliability by suppressing an excessive increase in a discharge temperature at the compressor.

Still further, an object of the present invention is to provide a refrigeration cycle apparatus and a method of controlling a refrigeration cycle apparatus that are capable of improving the quick response of opening degree control of the expansion valve. Solution to Problem

According to the present invention the above objective is solved by the features of claim 1 and claim 6. Preferred embodiments are defined in the dependent claims.

According to the present invention, there is provided a refrigeration cycle apparatus for circulating refrigerant through a circuit in which a compressor having a changeable operating capacity, a condensor, an expansion valve having a changeable opening degree, and an evaporator are connected to each other by pipes, the refrigeration cycle apparatus including: a first temperature sensor for detecting a temperature of a heat medium to be subjected to heat exchange with the refrigerant in the condensor; a second temperature sensor for detecting a temperature of a heat medium to be subjected to heat exchange with the refrigerant in the evaporator; and a controller for controlling the operating capacity of the compressor and the opening degree of the expansion valve, the controller being configured to, when starting the compressor or when changing the operating capacity of the compressor, calculate a predicted value (Tc*) of a condensing temperature of the refrigerant and a predicted value (Te*) of an evaporating temperature of the refrigerant being predicted after the compressor is started or after the operating capacity of the compressor is changed, based on a detection value of the first temperature sensor, a detection value of the second temperature sensor, and a setting value (VP) of the operating capacity to be set for the compressor, and determine the opening degree to be set for the expansion valve based on the predicted value (Tc*) of the condensing temperature, the predicted value (Te*) of the evaporating temperature, and the setting value (VP) of the operating capacity to be set for the compressor.

Advantageous Effects of Invention

The one embodiment of the present invention is capable of setting the appropriate opening degree of the expansion valve based on the environmental conditions and the operating capacity of the compressor.

Further, the one embodiment of the present invention is capable of improving the operating efficiency by suppressing the decrease in the refrigerant pressure on the low-pressure side under the environmental condition in which the outside air temperature is low.

In addition, the one embodiment of the present invention is capable of improving the device reliability by suppressing the excessive increase in the discharge temperature at the compressor.

Still further, the one embodiment of the present invention is capable of improving the quick response of the opening degree control of the expansion valve.

Brief Description of Drawings

[Fig. 1] Fig. 1 is a configuration diagram of a refrigeration cycle apparatus according to Embodiment 1 of the present invention.
[Fig. 2] Fig. 2 is a diagram illustrating an overall control flow of the refrigeration cycle apparatus according to Embodiment 1 of the present invention.
[Fig. 3] Fig. 3 is a p-h diagram of the refrigeration cycle apparatus according to Embodiment 1 of the present invention.
[Fig. 4] Fig. 4 is a diagram showing a relationship between an opening degree of an expansion valve and a Cv value.
[Fig. 5] Fig. 5 is a diagram illustrating a base opening degree calculation flow of the refrigeration cycle apparatus according to Embodiment 1 of the present invention.
[Fig. 6] Fig. 6 is a p-h diagram showing low-pressure correction control of the refrigeration cycle apparatus according to Embodiment 1 of the present invention.
[Fig. 7] Fig. 7 is a diagram illustrating a low-pressure correction control flow of the refrigeration cycle apparatus according to Embodiment 1 of the present invention.
[Fig. 8] Fig. 8 is a diagram illustrating a Td correction control flow of the refrigeration cycle apparatus according to Embodiment 1 of the present invention.
[Fig. 9] Fig. 9 is a diagram showing examples of operation results of the refrigeration cycle apparatus according to Embodiment 1 of the present invention.

Description of Embodiments

Embodiment 1

<Refrigeration Cycle Apparatus Configuration>

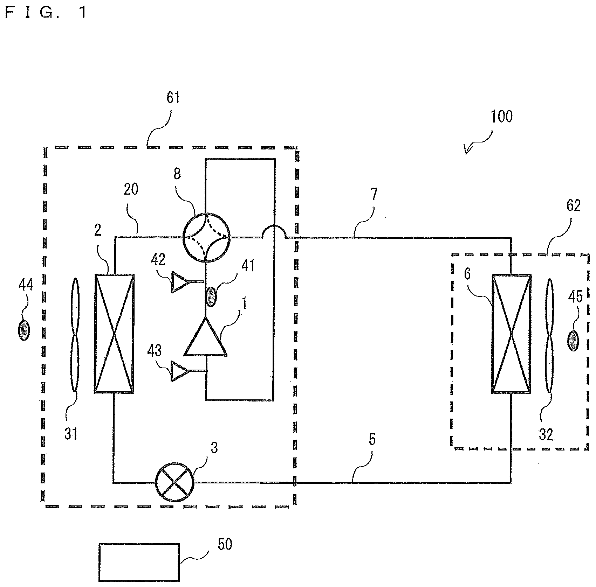

Fig. 1 is a configuration diagram of a refrigeration cycle apparatus according to Embodiment 1 of the present invention.
As illustrated in Fig. 1, a refrigeration cycle apparatus 100 includes an outdoor unit 61 and an indoor unit 62. The outdoor unit 61 and the indoor unit 62 are connected to each other by a liquid pipe 5 and a gas pipe 7, forming a refrigerant circuit 20, which is described later. The outdoor unit 61 transfers heat to or removes heat from a heat source, such as outside air. The indoor unit 62 transfers heat to or removes heat from a load, such as indoor air. Note that, although only one indoor unit 62 is illustrated in Fig. 1, a plurality of indoor units 62 may be employed.

<Outdoor Unit Configuration>

The outdoor unit 61 includes a compressor 1, a four-way valve 8, which is a flow switching device, an outdoor heat exchanger 2 for exchanging heat with a heat medium, such as outside air or water, and an expansion valve 3, which is a pressure reducing device. These parts are connected to each other by a refrigerant pipe. The outdoor unit 61 further includes an outdoor fan 31, which is a device for conveying the heat medium, such as outside air or water, to the outdoor heat exchanger 2. Each of the parts included in the outdoor unit 61 is described below in order.

(Compressor)

The compressor 1 is, for example, a hermetically sealed compressor, and capable of changing its rotation speed with an inverter based on a command from a controller 50. The controller 50 is configured to adjust a flow rate of refrigerant circulating through the refrigerant circuit 20 by controlling the rotation speed of the compressor 1 based on an air-conditioning load or other conditions. As a result, the amount of heat that is transferred or removed in the indoor unit 62 is adjusted, and when the load side is the indoor air, for example, the indoor air temperature can be appropriately maintained.

(Four-way Valve)

The four-way valve 8 is used to switch passages so that gas refrigerant discharged from the compressor 1 flows to the outdoor heat exchanger 2 or to an indoor heat exchanger 6. By switching passages with the four-way valve 8, for example, the outdoor heat exchanger 2 can be made to function as a condensor (radiator) or to function as an evaporator.

(Outdoor Heat Exchanger)

The outdoor heat exchanger 2 is, for example, a fin-and-tube heat exchanger, and for exchanging heat between outside air as a heat medium supplied from the outdoor fan 31 and the refrigerant. Note that, the heat medium exchanging heat with the refrigerant in the outdoor heat exchanger 2 is not limited to outside air (air). For example, water and a non-frozen liquid may also be used as the heat source. In this case, a plate heat exchanger is used for the outdoor heat exchanger 2, and a pump instead of the outdoor fan 31 is used as a heat source-side conveying device. Further, the outdoor heat exchanger 2 may also be configured to supply a heat source having a stable temperature throughout the year by using geothermal heat drawn from heat-exchanging pipes buried in the ground.

(Expansion Valve)

The expansion valve 3 is a valve capable of changing the opening degree based on a command from the controller 50. As the expansion valve 3, for example, an electronically-controlled expansion valve (linear expansion valve: LEV) may be used. The passage resistance is changed by changing the opening degree of the expansion valve 3. The operation for setting the opening degree of the expansion valve 3 is described later.

<Indoor Unit Configuration>

The indoor unit 62 includes the indoor heat exchanger 6 for exchanging heat with a heat medium, such as indoor air, and an indoor fan 32, which is a device for conveying the heat medium, such as indoor air. Each of the parts included in the indoor unit 62 is described below in order.

(Indoor Heat Exchanger)

The indoor heat exchanger 6 is, for example, a fin-and-tube heat exchanger, and for exchanging heat between indoor air as a heat medium supplied from the indoor fan 32 and the refrigerant. Note that, the heat medium exchanging heat with the refrigerant in the indoor heat exchanger 6 is not limited to indoor air. For example, water and a non-frozen liquid may also be used as the heat source. In this case, a plate heat exchanger is used for the indoor heat exchanger 6, and a pump instead of the indoor fan 32 is used as a load-side conveying device.

(Connecting Pipes)

The liquid pipe 5 and the gas pipe 7, which are connecting pipes connecting the outdoor unit 61 and the indoor unit 62, each have a predetermined length that is necessary for connection. Further, the gas pipe 7 usually has a larger pipe diameter than the liquid pipe 5. The liquid pipe 5 connects between the expansion valve 3 of the outdoor unit 61 and the indoor heat exchanger 6 of the indoor unit 62. The gas pipe 7 connects between the four-way valve 8 of the outdoor unit 61 and the indoor heat exchanger 6 of the indoor unit 62. Connecting the outdoor unit 61 and the indoor unit 62 to each other in this manner by the liquid pipe 5 and the gas pipe 7 forms the refrigerant circuit 20. In the refrigerant circuit 20, refrigerant circulates through, in order, the compressor 1, the four-way valve 8, the indoor heat exchanger 6, the expansion valve 3, the outdoor heat exchanger 2, and the four-way valve 8.

<Sensors and Controller>

Next, sensors and the controller 50 included in the refrigeration cycle apparatus 100 are described.
A discharge temperature sensor 41 for detecting the temperature of the refrigerant discharged from the compressor 1 (hereinafter referred to as "discharge temperature Td") is arranged on the discharge side of the compressor 1. A discharge pressure sensor 42 for detecting the pressure of the refrigerant discharged from the compressor 1 (hereinafter referred to as "discharge pressure Pd") is arranged on the discharge side of the compressor 1. A suction pressure sensor 43 for detecting the pressure of the refrigerant discharged from the compressor 1 (hereinafter referred to as "suction pressure Ps") is arranged on the suction side of the compressor 1.
The outdoor unit 61 includes an outdoor temperature sensor 44 for detecting the temperature of the air (outside air) to be subjected to heat exchange with the refrigerant in the outdoor heat exchanger 2. The indoor unit 62 includes an indoor temperature sensor 45 for detecting the temperature of the air (indoor air) to be subjected to heat exchange with the refrigerant in the indoor heat exchanger 6.
In other words, during a heating operation, the outdoor temperature sensor 44 detects the temperature of the air being sucked into the evaporator (evaporator suction air temperature Tae), and the indoor temperature sensor 45 detects the temperature of the air being sucked into the condensor (condensor suction air temperature Tac). Further, during a cooling operation, the outdoor temperature sensor 44 detects the temperature of the air being sucked into the condensor (condensor suction air temperature Tac), and the indoor temperature sensor 45 detects the temperature of the air being sucked into the evaporator (evaporator suction air temperature Tae).

Note that, of the outdoor temperature sensor 44 and the indoor temperature sensor 45, the sensor detecting the condensor suction air temperature Tac corresponds to a "first temperature sensor" in the present invention.

Further, of the outdoor temperature sensor 44 and the indoor temperature sensor 45, the sensor detecting the evaporator suction air temperature Tae corresponds to a "second temperature sensor" in the present invention.

In addition, the discharge temperature sensor 41 corresponds to a "third temperature sensor" in the present invention.

The controller 50, which is configured from a microcomputer, includes a central processing unit (CPU), a random-access memory (RAM), a read-only memory (ROM), and the like. The ROM stores a control program, programs corresponding to flowcharts that are described later, and the like. The controller 50 controls the compressor 1, the expansion valve 3, the outdoor fan 31, and the indoor fan 32 based on detection values from the respective sensors. Further, the controller 50 performs a cooling operation or a heating operation by switching the four-way valve 8. Note that, the controller 50 may be included in the outdoor unit 61, or may be included in the indoor unit 62, or may even be divided into an outdoor control device and an indoor control device that are configured to perform processing cooperatively together.

Next, behaviors on the refrigerant circuit 20 during the heating operation and the cooling operation are described.

<Refrigerant Behavior during Heating Operation>

During the heating operation, the four-way valve 8 is switched to a state indicated by the solid lines in Fig. 1. High-temperature, high-pressure refrigerant discharged from the compressor 1 passes through the four-way valve 8 and flows into the gas pipe 7. The refrigerant then flows into the indoor heat exchanger 6 of the indoor unit 62. The indoor heat exchanger 6 acts as a condensor during the heating operation, and hence the refrigerant that has flowed into the indoor heat exchanger 6 exchanges heat with the indoor air from the indoor fan 32, thereby transferring heat into a room. As a result, the temperature of the refrigerant decreases, turning the refrigerant into a subcooled liquid refrigerant, which flows out of the indoor heat exchanger 6.

The refrigerant that has flowed out of the indoor heat exchanger 6 flows into the liquid pipe 5, and then into the outdoor unit 61. The pressure of the refrigerant that has flowed into the outdoor unit 61 is reduced by the expansion valve 3, turning the refrigerant into a two-phase gas-liquid refrigerant, which flows into the outdoor heat exchanger 2. The outdoor heat exchanger 2 acts as an evaporator during the heating operation, and hence the refrigerant that has flowed into the outdoor heat exchanger 2 removes heat through heat exchange with the outside air blown from the outdoor fan 31. This causes the refrigerant to evaporate, turning into gaseous state refrigerant, which flows out of the outdoor heat exchanger 2. The refrigerant that has flowed out of the outdoor heat exchanger 2 passes through the four-way valve 8 and is sucked into the compressor 1.

<Refrigerant Behavior during Cooling Operation>

During the cooling operation, the four-way valve 8 is switched to a state indicated by the dotted lines in Fig. 1. High-temperature, high-pressure refrigerant discharged from the compressor 1 passes through the four-way valve 8 and flows into the outdoor heat exchanger 2. The refrigerant flowing into the outdoor heat exchanger 2 is in a refrigerant state that is roughly the same as the high-temperature, high-pressure refrigerant discharged from the compressor 1. The outdoor heat exchanger 2 acts as a condensor during the cooling operation, and hence the refrigerant that has flowed into the outdoor heat exchanger 2 exchanges heat with the outside air from the outdoor fan 31, thereby transferring heat to the outside. As a result, the temperature of the refrigerant decreases, turning the refrigerant into a subcooled liquid refrigerant, which flows out of the outdoor heat exchanger 2.

The pressure of the refrigerant that has flowed out of the outdoor heat exchanger 2 is reduced by the expansion valve 3, turning the refrigerant into a two-phase gas-liquid refrigerant, which flows into the liquid pipe 5. The refrigerant then flows into the indoor heat exchanger 6 of the indoor unit 62. The indoor heat exchanger 6 acts as an evaporator during the cooling operation, and hence the refrigerant that has flowed into the indoor heat exchanger 6 removes heat through heat exchange with the indoor air blown from the indoor fan 32. This causes the refrigerant to evaporate, turning into gaseous state refrigerant, which flows out of the indoor heat exchanger 6. The refrigerant that has flowed out of the indoor heat exchanger 6 flows into the gas pipe 7. The refrigerant that has flowed into the gas pipe 7 flows into the outdoor unit 61. The refrigerant that has flowed into the outdoor unit 61 passes through the four-way valve 8 and is sucked into the compressor 1.

The refrigeration cycle apparatus 100 of Embodiment 1 is capable of switching between the heating operation and the cooling operation. However, the present invention is not limited to such a configuration. The present invention may also be configured to perform only the heating operation or only the cooling operation. In such a case, the four-way valve 8 may be omitted.

<Control Operation>

Next, a control operation for setting the opening degree of the expansion valve 3 is described.

The control operation for setting the opening degree of the expansion valve 3 can be broadly classified into a base opening degree calculation, low-pressure correction control, and Td correction control. The controller 50 sets the opening degree of the expansion valve 3 by sequentially performing the calculation and control operations when starting the compressor 1 or when changing the operating capacity of the compressor 1.

The overall control flow is first described below, and then the calculation and control operations are described in detail.

(Overall Control Flow)

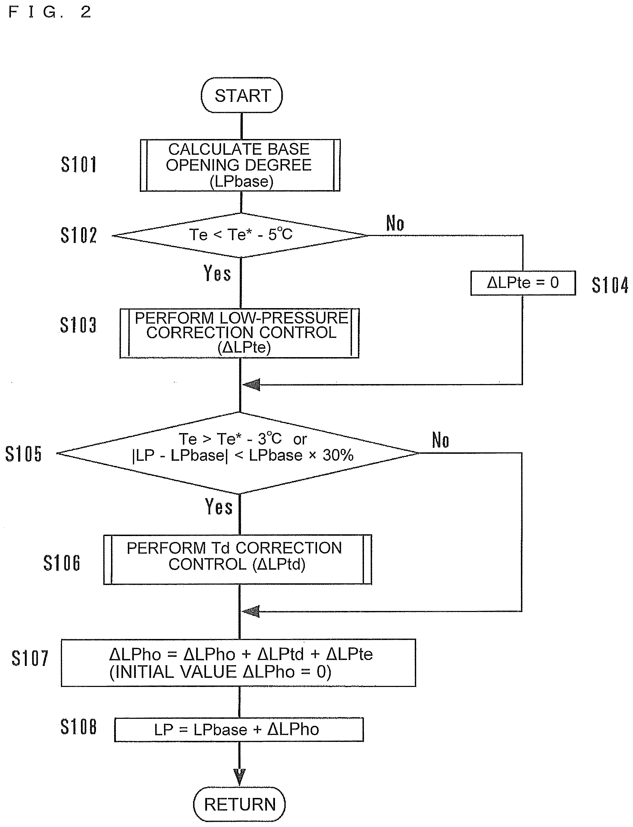

Fig. 2 is a diagram illustrating an overall control flow of the refrigeration cycle apparatus according to Embodiment 1 of the present invention. The overall control flow is described below based on each of the steps of Fig. 2.

(S101)

The controller 50 calculates a base opening degree (LPbase).

In the base opening degree calculation, the controller 50 calculates a predicted value $Tc^*$ of the condensing temperature and a predicted value $Te^*$ of the evaporating temperature after the compressor 1 is started or after the operating capacity of the compressor 1 is changed. Further, the controller 50 calculates the base opening degree LPbase to be set for the expansion valve 3 based on the predicted value $Tc^*$ of the condensing temperature, the predicted value $Te^*$ of the evaporating temperature, and a setting value of the operating capacity to be set for the compressor 1 (hereinafter referred to as "compressor capacity VP"). This calculation is described in more detail later.

(S102)

The controller 50 determines whether or not an actual measured value Te of the current evaporating temperature is less than a value obtained by subtracting a predetermined temperature (e.g., 5 degrees C) from the predicted value $Te^*$ of the evaporating temperature.

The actual measured value Te of the evaporating temperature can be calculated by converting the suction pressure Ps detected by the suction pressure sensor 43 into a refrigerant saturated gas temperature. Note that, a temperature sensor for detecting the evaporating temperature may also be separately provided.

Further, although in this example a predetermined temperature is subtracted from the predicted value $Te^*$ of the evaporating temperature, the present invention is not limited to this embodiment. This step may also be made by determining whether or not the actual measured value Te of the evaporating temperature is less than the predicted value $Te^*$.

(S103)

When the actual measured value Te of the current evaporating temperature is less than the value obtained by subtracting the predetermined temperature from the predicted value $Te^*$ of the evaporating temperature, the controller 50 performs low-pressure correction control.

In the low-pressure correction control, the controller 50 calculates a predicted value $\Delta P^*$ of a pressure difference between the condensing pressure of the condensor and the evaporating pressure of the evaporator based on the predicted value $Tc^*$ of the condensing temperature and the predicted value $Te^*$ of the evaporating temperature. Further, the controller 50 calculates a low-pressure correction opening degree $\Delta LPte$ for correcting the opening degree of the expansion valve 3 based on an actual measured value $\Delta P$ of the pressure difference between the condensing pressure of the condensor and the evaporating pressure of the evaporator and on the predicted value $\Delta P^*$ of the pressure difference. These calculations are described in more detail later.

(S104)

When the actual measured value Te of the current evaporating temperature is not less than the value obtained by subtracting the predetermined temperature from the predicted value $Te^*$ of the evaporating temperature, the controller 50 sets the low-pressure correction opening degree ΔLPte to zero, and the processing proceeds to Step S106.

(S105)

The controller 50 determines whether or not the actual measured value Te of the evaporating temperature is larger than a value obtained by subtracting a predetermined temperature (e.g., 3 degrees C) from the predicted value Te* of the evaporating temperature. Alternatively, the controller 50 determines whether or not the absolute value of a difference between a setting opening degree LP of the expansion valve 3 and the base opening degree LPbase is less than a predetermined ratio (e.g., 30%) of the base opening degree LPbase. When this condition is satisfied, the processing proceeds to Step S106 and the controller 50 performs Td correction control. On the other hand, when this condition is not satisfied, the processing proceeds to Step S107.

In other words, when a deviation between the actual measured value Te of the evaporating temperature and the predicted value Te* of the evaporating temperature has decreased, or, when a deviation between the current setting opening degree LP and the base opening degree LPbase has decreased, the controller 50 performs the Td correction control.

(S106)

The controller 50 performs the Td correction control.

In the Td correction control, the controller 50 calculates a target value Tdm for the discharge temperature of the refrigerant to be discharged from the compressor 1 based on the predicted value Tc* of the condensing temperature, the predicted value Te* of the evaporating temperature, and the compressor capacity VP. Further, the controller 50 calculates a Td correction opening degree ΔLPtd for correcting the opening degree of the expansion valve 3 based on a difference between the actual measured value of the discharge temperature Td detected by the discharge temperature sensor 41 and the target value Tdm for the discharge temperature. These calculations are described in more detail later.

(S107)

The controller 50 updates a correction opening degree ΔLPho by adding the low-pressure correction opening degree ΔLPte and the Td correction opening degree ΔLPtd to the current correction opening degree ΔLPho. Note that, the initial value of the correction opening degree ΔLPho is zero.

(S108)

The controller 50 calculates the setting opening degree LP by adding the correction opening degree ΔLPho to the base opening degree LPbase, and then sets the opening degree of the expansion valve 3 to the setting opening degree LP. The processing then returns to Step S101, and the operations described above are repeated.

Next, the base opening degree calculation, low-pressure correction control, and Td correction control are described in more detail.

(Base Opening Degree Calculation)

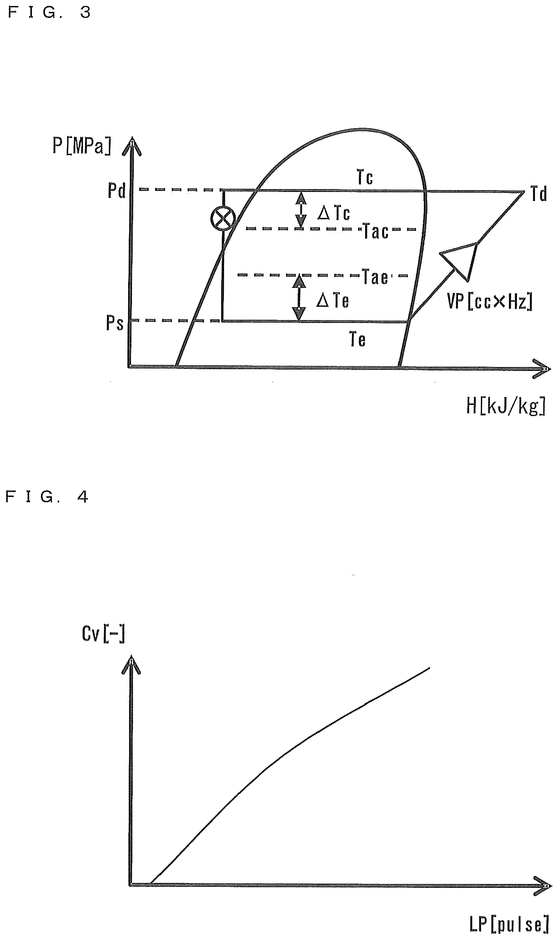

Fig. 3 is a p-h diagram of the refrigeration cycle apparatus according to Embodiment 1 of the present invention.

Fig. 4 is a diagram showing a relationship between the opening degree of the expansion valve and a Cv value.

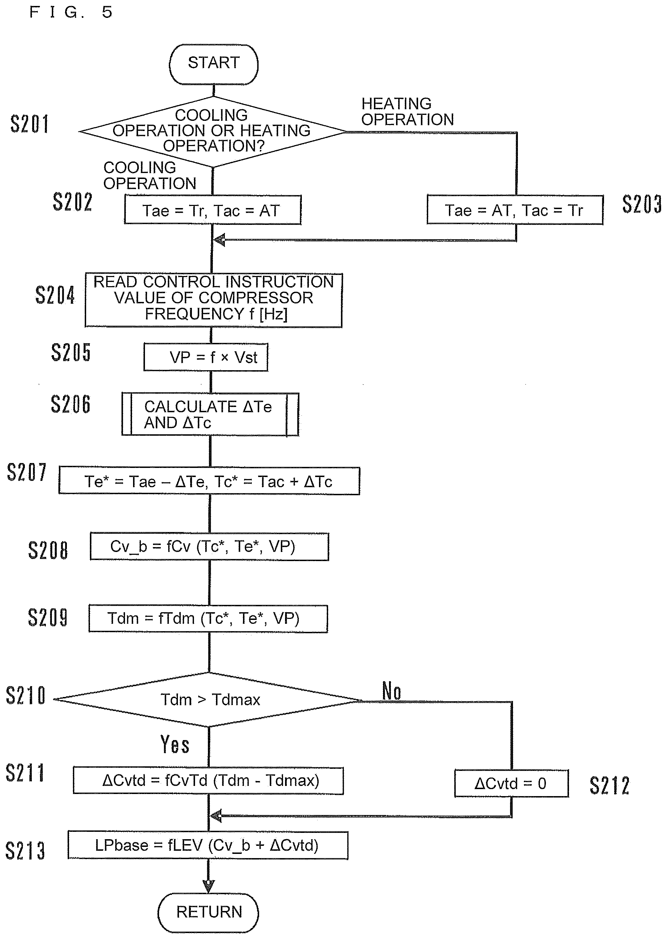

Fig. 5 is a diagram illustrating a base opening degree calculation flow of the refrigeration cycle apparatus according to Embodiment 1 of the present invention. The respective steps of Fig. 5 are described below with reference to Fig. 3 and Fig. 4.

(S201)

The controller 50 determines whether the current operating state is the heating operation or the cooling operation. When the current operating state is determined to be the cooling operation, the processing proceeds to Step S202. When the current operating state is determined to be the heating operation, the processing proceeds to Step S203.

(S202)

The controller 50 acquires an outside air temperature AT detected by the outdoor temperature sensor 44 as the condensor suction air temperature Tac. Further, the controller 50 acquires an indoor temperature Tr detected by the indoor temperature sensor 45 as the evaporator suction air temperature Tae.

(S203)

The controller 50 acquires the outside air temperature AT detected by the outdoor temperature sensor 44 as the evaporator suction air temperature Tae. Further, the controller 50 acquires the indoor temperature Tr detected by the indoor temperature sensor 45 as the condensor suction air temperature Tac.

(S204)

When starting the compressor 1 or changing the operating capacity of the compressor 1, the controller 50 reads a control instruction value of a frequency f to be set for the compressor 1.

(S205)

The controller 50 calculates the setting value of the operating capacity (compressor capacity VP [cc × Hz]) to be set for the compressor 1 when starting the compressor 1 or when changing the operating capacity of the compressor 1 by multiplying the frequency f (Hz) by a displacement Vst [cc] of the compressor 1. Note that, the displacement Vst, which is a value unique to the compressor 1, is stored in advance in the ROM and the like.

(S206)

The controller 50 calculates ΔTe and ΔTc.

As shown in Fig. 3, during stable operation, the evaporating temperature Te is lower than the evaporator suction air temperature Tae by ΔTe. Further, during stable operation, the condensing temperature Tc is higher than the condensor suction air temperature Tac by ΔTc. In other words, ΔTe is a predicted value of the difference between the evaporating temperature Te and the evaporator suction air temperature Tae during stable operation after the compressor 1 is started or after the operating capacity of the compressor 1 is changed. Further, ΔTc is a predicted value of the difference between the condensing temperature Tc and the condensor suction air temperature Tac during stable operation after the compressor 1 is started or after the operating capacity of the compressor 1 is changed.

Calculation examples of ΔTe and ΔTc are described below.

(ΔTe)

Expression (1) and Expression (2) hold from the energy balance between the refrigerant and the air (heat medium) in the evaporator.

[Math. 1]

$$VP \times \rho s \times \eta_v \times \Delta he = AK \times \Delta Te \qquad (1)$$

VP:     Compressor capacity [cc × Hz]
$\rho s$:     Compressor suction refrigerant density [kg/m$^3$]
$\eta_v$:     Volumetric efficiency [-]
$\Delta he$:     Refrigerating effect [kJ/kg]
AK:     Evaporator AK value [kW/K]
$\Delta Te$:     Evaporator temperature difference predicted value [K]

[Math. 2]

$$VP_{std} \times \rho s_{std} \times \eta_v \times \Delta he = AK_{std} \times \Delta Te_{std} \qquad (2)$$

$VP_{std}$: Compressor capacity under standard conditions [cc × Hz]
$\rho s_{std}$: Compressor suction refrigerant density under standard conditions [kg/m$^3$]
$AK_{std}$: Evaporator AK value under standard conditions [kW/K]

Δhe: Refrigerating effect [kJ/kg]
AK: Evaporator AK value [kW/K]
$\Delta Te_{std}$: Evaporator temperature difference predicted value under standard conditions [K]

Assuming that $\eta_v$ and AK are fixed and rearranging Expression (1) and Expression (2) gives Expression (3).
[Math. 3]

$$\frac{\rho s}{\rho s_{std}} = \frac{VP_{std}}{VP} \times \frac{\Delta Te}{\Delta Te_{std}} \qquad (3)$$

The left side of Expression (3) can be approximated by a linear function of ΔTe from a test value under standard conditions and the like. Therefore, by modifying Expression (3) and taking the coefficient to be α, ΔTe can be represented by Expression (4).
[Math. 4]

$$\Delta Te = \alpha \times VP \qquad (4)$$

The controller 50 calculates ΔTe by substituting the compressor capacity VP into Expression (4).

(ΔTc)

Next, a calculation example of ΔTc is described.
Expression (5) and Expression (6) hold from the energy balance between the refrigerant and the air (heat medium) in the condensor.
[Math. 5]

$$VP \times \rho s \times \eta_v \times \Delta hc = AK \times \Delta Tc \qquad (5)$$

VP:      Compressor capacity [cc × Hz]
ρs:      Compressor suction refrigerant density [kg/m$^3$]
$\eta_v$:      Volumetric efficiency [-]
Δhe:     Refrigerating effect [kJ/kg]
AK:      Evaporator AK value [kW/K]
ΔTc:     Condensor temperature difference predicted value [K]

[Math. 6]

$$VP_{std} \times \rho s_{std} \times \eta_v \times \Delta hc = AK_{std} \times \Delta Tc_{std} \qquad (6)$$

$VP_{std}$: Compressor capacity under standard conditions [cc × Hz]
$\rho s_{std}$: Compressor suction refrigerant density under standard conditions [kg/m$^3$]
$AK_{std}$: Evaporator AK value under standard conditions [kW/K]
Δhe: Refrigerating effect [kJ/kg]
AK: Evaporator AK value [kW/K]
$\Delta Tc_{std}$: Condensor temperature difference predicted value under standard conditions [K]

When $\eta_v$ and AK are assumed to be fixed, Expression (5) and Expression (6) are rearranged, and the coefficient is taken to be β, ΔTc is represented by Expression (7).
[Math. 7]

$$\Delta Tc = \beta \times VP \qquad (7)$$

The controller 50 calculates ΔTc by substituting the compressor capacity VP into Expression (7).

(S207)

The controller 50 calculates the predicted value Te* of the evaporating temperature by substituting the current evaporator suction air temperature Tae and the calculated ΔTe into Expression (8).
[Math. 8]

$$Te^* = Tae - \Delta Te \qquad (8)$$

The controller 50 calculates the predicted value Tc* of the condensing temperature by substituting the current condensor suction air temperature Tac and the calculated ΔTc into Expression (9).
[Math. 9]

$$Tc^* = Tac + \Delta Tc \qquad (9)$$

(S208)

The controller 50 determines a base Cv value (Cv_b) of the expansion valve 3 based on the predicted value Tc* of the condensing temperature, the predicted value Te* of the evaporating temperature, and the compressor capacity VP.
A calculation example of the base Cv value (Cv_b) is described below.
For the Cv value of the expansion valve 3, the relationship shown in Expression (10) holds.
[Math. 10]

$$Cv \propto \frac{Gr}{\sqrt{\rho_l \times \Delta P}} \qquad (10)$$

Cv: Flow rate coefficient [-]
Gr: Refrigerant circuit amount [kg/s]
$\rho l$: Expansion valve inlet refrigerant density [kg/m$^3$]
$\Delta P$: High/low pressure difference [MPa]

The refrigerant circuit amount Gr is represented by Expression (11).
[Math. 11]

$$Gr = \rho_s \times \eta_v \times VP \qquad (11)$$

$\rho s$: Compressor suction refrigerant density [kg/m$^3$]
$\eta_v$: Volumetric efficiency [-]

From Expression (10) and Expression (11), the base Cv value (Cv_b) of the expansion valve 3 after the compressor 1 is started or after the operating capacity of the compressor 1 is changed is represented by Expression (12).
[Math. 12]

$$Cv\_b \propto \frac{\rho_s{}^* \times \eta_v \times VP}{\sqrt{\rho_l \times \Delta P^*}} \qquad (12)$$

$\rho s^*$: Compressor suction refrigerant density at predicted value Te* [kg/m$^3$]

$\Delta P^*$: Predicted value of high/low pressure difference at predicted value Tc* and predicted value Te* [MPa]

The controller 50 calculates ΔP* by converting the predicted value Tc* of the condensing temperature and the predicted value Te* of the evaporating temperature into a condensing pressure Pd and an evaporating pressure Ps using a saturation temperature.

Further, from the relationship in Expression (3), $\rho s^*$ is calculated using the predicted value Te*.

In addition, $\rho l$ is taken to be the liquid density (fixed) based on the assumption that the refrigerant at the inlet of the expansion valve 3 is in a liquid state. Note that, $\eta_v$ is assumed to be fixed (unique value).

The controller 50 calculates the base Cv value (Cv_b) of the expansion valve 3 by substituting these values into Expression (12).

(S209)

The controller 50 calculates the target value Tdm for the discharge temperature of the refrigerant to be discharged from the compressor 1 based on the predicted value Tc* of the condensing temperature, the predicted value Te* of the evaporating temperature, and the compressor capacity VP.

For example, a theoretical value, test data, or the like of a characteristic of the discharge temperature Td for the condensing temperature Tc, the evaporating temperature Te, and the compressor capacity VP when the degree of suction superheat of the compressor 1 is zero is stored in advance as a table in the ROM, for example. The discharge temperature Td corresponding to the predicted value Tc, the predicted value Te*, and the compressor capacity VP is set as the target value Tdm for the discharge temperature by referring to this table. In other words, as shown in Fig. 3, the target value Tdm for the discharge temperature is the discharge temperature Td when the degree of suction superheat of the compressor 1 is zero.

(S210)

The controller 50 determines whether or not the target value Tdm for the discharge temperature calculated in Step S209 is more than a discharge temperature maximum permitted value Tdmax.

The discharge temperature maximum permitted value Tdmax, which is a value unique to the compressor 1, is stored in advance in the ROM and the like.

(S211)

When the target value Tdm for the discharge temperature is more than the discharge temperature maximum permitted value Tdmax, the controller 50 calculates a Cv correction value ΔCvtd based on a difference between the target value Tdm for the discharge temperature and the discharge temperature maximum permitted value Tdmax.

The Cv correction value ΔCvtd is a value greater than zero. As the difference between the target value Tdm for the discharge temperature and the discharge temperature maximum permitted value Tdmax becomes larger, the larger value is set as the Cv correction value ΔCvtd. In other words, when the target value Tdm for the discharge temperature is more than the discharge temperature maximum permitted value Tdmax, the Cv value is corrected so that the opening degree of the expansion valve 3 increases to prevent the discharge temperature Td after startup from being equal to or more than the discharge temperature maximum permitted value Tdmax.

(S212)

When the target value Tdm for the discharge temperature is not more than the discharge temperature maximum permitted value Tdmax, the controller 50 sets the Cv correction value ΔCvtd to zero, and the processing proceeds to Step S213.

(S213)

The controller 50 calculates a base opening degree LPbase by converting a value obtained by adding the Cv correction value ΔCvtd to the base Cv value (Cv_b) of the expansion valve 3 using a conversion function fLEV for converting the Cv value into the setting opening degree LP.

As shown in Fig. 4, the Cv value [-] and the setting opening degree LP [pulse] have a correspondence relationship unique to the expansion valve 3. Such a correspondence relationship is approximated and stored in the ROM in advance as the conversion function fLEV. Note that, the correspondence relationship between the setting opening degree LP and the Cv value may also be stored as table information.

The controller 50 then finishes the base opening degree calculation, and the processing proceeds to Step S102 (Fig. 2).

(Low-Pressure Correction Control)

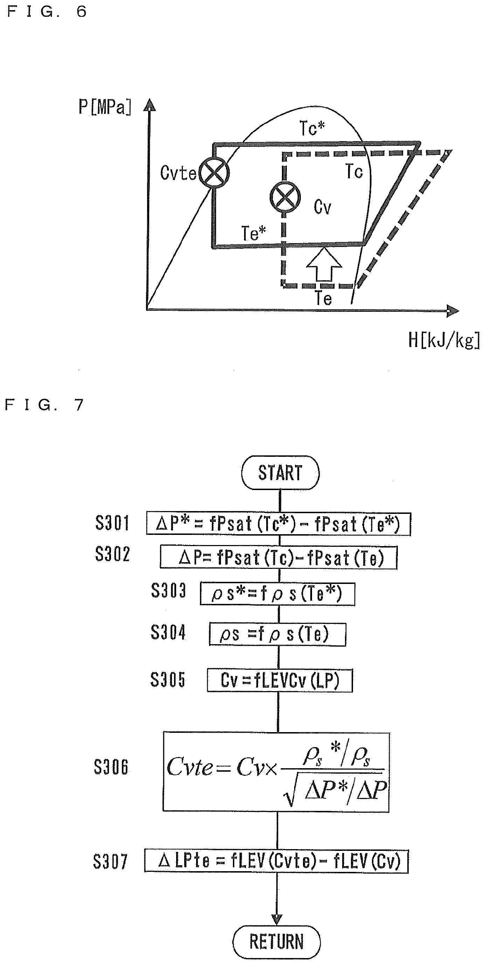

Fig. 6 is a p-h diagram showing low-pressure correction control of the refrigeration cycle apparatus according to Embodiment 1 of the present invention.

Fig. 7 is a diagram illustrating a low-pressure correction control flow of the refrigeration cycle apparatus according to Embodiment 1 of the present invention.

The above-mentioned base opening degree LPbase is an opening degree calculated based on the assumption that the refrigerant at the inlet of the expansion valve 3 is in a liquid state. When the refrigerant at the inlet of the expansion valve 3 is in a two-phase gas-liquid state, the refrigerant density is less than that for a liquid state. As a result, pressure loss increases, which can lead to a decrease in the refrigerant pressure on the low-pressure side (drawing-in of low-pressure).

In Fig. 6, the solid line represents a refrigerant circuit in which the refrigerant at the inlet of the expansion valve 3 is in a liquid state when the pressure on the low-pressure side (predicted value Tc* and predicted value Te*) is stable. The dotted line represents a refrigerant circuit in which the refrigerant at the inlet of the expansion valve 3 is in a two-phase gas-liquid state when the pressure on the low-pressure side has decreased.

As can be seen from above, when the current evaporating temperature Te is lower than the predicted value Te*, the controller 50 determines that the refrigerant at the inlet of the expansion valve 3 is in a two-phase gas-liquid state (low density) (S102), and performs low-pressure correction control. Further, the controller 50 also suppresses the decrease in pressure on the low-pressure side by correcting the opening degree of the expansion valve 3 so that the condensing temperature is the predicted value Tc* and the evaporating temperature is the predicted value Te*.

A calculation example of the low-pressure correction opening degree ΔLPte is described below.

From the relationship between Expression (10) and Expression (11), in the refrigerant circuit when the pressure on the low-pressure side is stable (predicted value Tc* and predicted value Te*), Expression (13) holds. Further, in the refrigerant circuit when the pressure on the low-pressure side has decreased (actual measured value Tc of the condensing temperature and actual measured value Te of the evaporating temperature), Expression (14) holds.

[Math. 13]

$$Cvte \propto \frac{\rho_s{}^* \times \eta_v \times VP}{\sqrt{\rho_l \times \Delta P^*}} \qquad (13)$$

Cvte: Corrected Cv value [-]
$\rho s^*$: Compressor suction refrigerant density at predicted value Te* [kg/m$^3$] $\eta_v$: Volumetric efficiency [-]
VP: Compressor capacity [cc × Hz]
$\rho l$: Expansion valve inlet refrigerant density [kg/m$^3$]
ΔP*: Predicted value of high/low pressure difference at predicted value Tc* and predicted value Te* [MPa]

[Math. 14]

$$Cv \propto \frac{\rho_s \times \eta_v \times VP}{\sqrt{\rho_l \times \Delta P}} \qquad (14)$$

Cv: Cv value before correction [-]
$\rho s$: Compressor suction refrigerant density at actual measured value Te [kg/m$^3$]
$\eta_v$: Volumetric efficiency [-]
VP: Compressor capacity [cc × Hz]

$\rho$l: Expansion valve inlet refrigerant density [kg/m$^3$]

$\Delta$P: Actual measured value of pressure difference between condensing pressure Pd of condensor and evaporating pressure Ps of evaporator [MPa]

Rearranging Expression (13) and Expression (14) gives Expression (15).
[Math. 15]

$$Cvte = Cv \times \frac{\rho_s{}^* / \rho_s}{\sqrt{\Delta P^* / \Delta P}} \qquad (15)$$

Therefore, the low-pressure correction opening degree $\Delta$LPte required to achieve the predicted value Tc* and the predicted value Te* is represented by Expression (16).
[Math. 16]

$$\Delta LPte = fLEV(Cvte) - fLEV(Cv) \qquad (16)$$

fLEV: Conversion function

Next, the low-pressure correction control operation is described based on each of the steps of Fig. 7.

(S301)

The controller 50 calculates the predicted value $\Delta$P* of the high/low pressure difference based on the predicted value Tc* of the condensing temperature and the predicted value Te* of the evaporating temperature. For example, the predicted value Tc* of the condensing temperature is converted into the condensing pressure Pd and the predicted value Te* of the evaporating temperature is converted into the evaporating pressure Ps using their respective saturation temperatures. Then, the predicted value $\Delta$P* of the high/low pressure difference is calculated based on the difference between the condensing pressure Pd and the evaporating pressure Ps.

(S302)

The controller 50 calculates the actual measured value $\Delta$P of the high/low pressure difference based on the difference between the discharge pressure Pd detected by the discharge pressure sensor 42 and the suction pressure Ps detected by the suction pressure sensor 43. Note that, the actual measured value $\Delta$P of the high/low pressure difference may also be calculated by separately providing a temperature sensor for detecting the condensing temperature and a temperature sensor for detecting the evaporating temperature, and converting the measured temperatures into the respective pressure values.

(S303)

From the relationship in Expression (3), the controller 50 calculates $\rho$s* using the predicted value Te*.

(S304)

The controller 50 calculates ps using the actual measured value Te of the current evaporating temperature based on the relationship in Expression (3).

The actual measured value Te of the evaporating temperature can be calculated by converting the suction pressure Ps detected by the suction pressure sensor 43 into a refrigerant saturated gas temperature. Note that, a temperature sensor for detecting the evaporating temperature may also be separately provided.

(S305)

The controller 50 converts the current setting opening degree LP into a Cv value using the conversion function fLEVCv for converting the setting opening degree LP into a Cv value.

As shown in Fig. 4, the conversion function fLEVCv may be determined based on the correspondence relationship between the Cv value [-] and the setting opening degree LP [pulse], or may be stored as table information.

(S306)

The controller 50 calculates the Cvte, which is the corrected Cv value, by substituting each of the values calculated in Step S301 to Step S305 into Expression (15).

(S307)

The controller 50 calculates the difference between a value obtained by converting the Cvte into an opening degree setting value and a value obtained by converting the current Cv value into an opening degree setting value as the low-pressure correction opening degree $\Delta$LPte.
The controller 50 then finishes the low-pressure correction control, and the processing proceeds to Step S105 (Fig. 2).

(Td Correction Control)

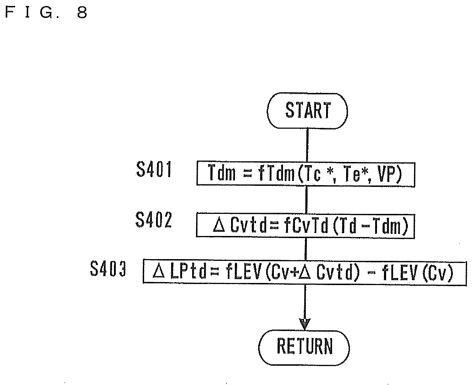

Fig. 8 is a diagram illustrating a Td correction control flow of the refrigeration cycle apparatus according to Embodiment 1 of the present invention. The control flow is described below based on each of the steps of Fig. 8.

(S401)

The controller 50 calculates the target value Tdm for the discharge temperature of the refrigerant to be discharged from the compressor 1 based on the predicted value Tc* of the condensing temperature, the predicted value Te* of the evaporating temperature, and the compressor capacity VP.
For example, the theoretical value, test data, or the like of a characteristic of the discharge temperature Td for the condensing temperature Tc, the evaporating temperature Te, and the compressor capacity VP when the degree of suction superheat of the compressor 1 is zero is stored in advance as a table in the ROM, for example. The discharge temperature Td corresponding to the predicted value Tc, the predicted value Te*, and the compressor capacity VP is set as the target value Tdm for the discharge temperature by referring to this table. In other words, as shown in Fig. 3, the target value Tdm for the discharge temperature is the discharge temperature Td when the degree of suction superheat of the compressor 1 is zero.

(S402)

The controller 50 calculates the Cv correction value $\Delta$Cvtd based on the difference between the current discharge temperature Td detected by the discharge temperature sensor 41 and the target value Tdm for the discharge temperature.
The Cv correction value $\Delta$Cvtd is a value greater than zero. As the difference between the current discharge temperature Td and the target value Tdm for the discharge temperature becomes larger, the larger value is set as the Cv correction value $\Delta$Cvtd.
Further, when the discharge temperature Td is more than the target value Tdm, the Cv correction value $\Delta$Cvtd is set to a positive value, and when the discharge temperature Td is less than the target value Tdm, the Cv correction value $\Delta$Cvtd is set to a negative value. In other words, the discharge temperature Td is controlled to be at the target value Tdm by increasing the opening degree of the expansion valve 3 when the actual measured value of the discharge temperature Td is more than the target value Tdm, and decreasing the opening degree of the expansion valve 3 when the actual measured value of the discharge temperature Td is less than the target value Tdm.

(S403)

The controller 50 converts a value calculated by adding $\Delta$Cvtd to the current Cv value into an opening degree setting value and converts the current Cv value into an opening degree setting value, and calculates the difference between the opening degree setting values obtained by the conversion as the Td correction opening degree $\Delta$LPtd.
The controller 50 then finishes the Td correction control, and the processing proceeds to Step S107 (Fig. 2).

<Operation Results>

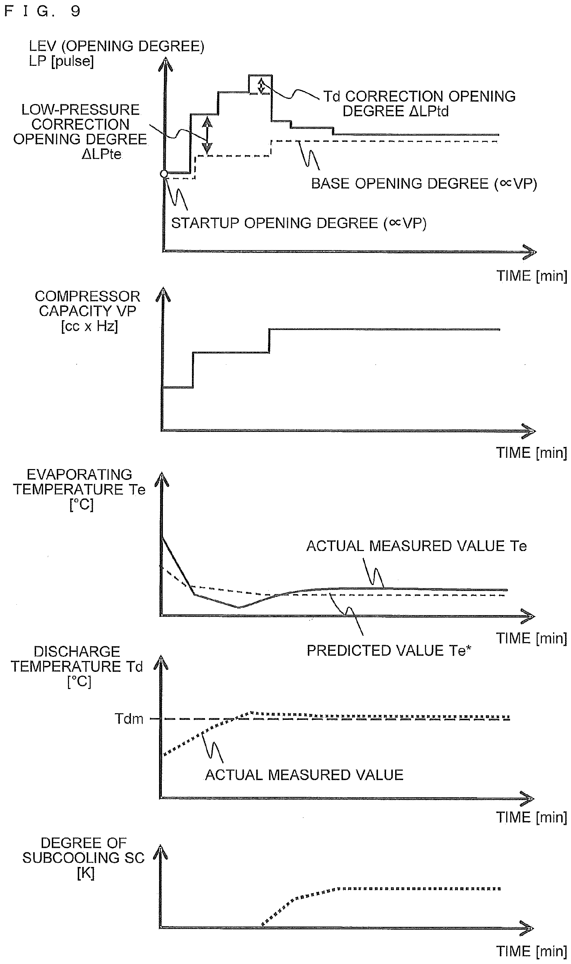

Fig. 9 is a diagram showing examples of operation results of the refrigeration cycle apparatus according to Embodiment 1 of the present invention.
As shown in Fig. 9, the base opening degree of the expansion valve 3 when the compressor 1 is started or when the compressor capacity VP is changed is a value that is proportional to the compressor capacity VP.

When the actual measured value of the current evaporating temperature Te is lower than the predicted value Te* by a predetermined temperature or more, the controller 50 determines that the refrigerant at the inlet of the expansion valve 3 is in a two-phase gas-liquid state (low density), and performs low-pressure correction control. As a result, the opening degree of the expansion valve 3 is increased by the low-pressure correction opening degree ΔLPte, and the decrease in the pressure on the low-pressure side is suppressed.

When the deviation between the actual measured value Te of the evaporating temperature and the predicted value Te* has decreased, or, when the deviation between the current setting opening degree LP of the expansion valve 3 and the base opening degree LPbase has decreased, Td correction control is performed. As a result, the discharge temperature Td is controlled to be at the target value Tdm by increasing or decreasing the opening degree of the expansion valve 3 by the Td correction opening degree ΔLPtd.

<Effects>

As described above, in Embodiment 1, when starting the compressor 1 or when changing the operating capacity of the compressor 1, the controller 50 calculates the predicted value Tc* of the condensing temperature of the refrigerant and the predicted value Te* of the evaporating temperature of the refrigerant after the compressor 1 is started or after the operating capacity of the compressor 1 is changed based on the condensor suction air temperature Tac, the evaporator suction air temperature Tae, and the compressor capacity VP. Further, the controller 50 determines the opening degree to be set for the expansion valve 3 based on the predicted value Tc* of the condensing temperature, the predicted value Te* of the evaporating temperature, and the compressor capacity VP.

Consequently, the appropriate opening degree of the expansion valve 3 can be set based on the environmental conditions and the compressor capacity VP. As a result, liquid can be prevented from flowing back into the compressor 1, allowing device reliability to be improved. Further, the predicted value Tc* and the predicted value Te* after the compressor 1 is started or after the operating capacity of the compressor 1 is changed are calculated, and hence the quick response of the opening degree control of the expansion valve 3 can be improved.

In addition, in Embodiment 1, the predicted value ΔP* of the pressure difference between the condensing pressure and the evaporating pressure is calculated based on the predicted value Tc* and the predicted value Te*, and the actual measured value ΔP of the pressure difference between the condensing pressure and the evaporating pressure is calculated based on the condensor suction air temperature Tac and the evaporator suction air temperature Tae. Then, the opening degree to be set for the expansion valve 3 is corrected by calculating the low-pressure correction opening degree ΔLPte based on the predicted value ΔP* of the pressure difference and the actual measured value ΔP of the pressure difference.

As a result, the decrease in the refrigerant pressure on the low-pressure side (drawing-in of low-pressure) that occurs under an environmental condition in which the outside air temperature is low can be suppressed. Further, suppressing the decrease in the refrigerant pressure on the low-pressure side enables the refrigerant circuit amount to be increased, and hence the heating capacity to be improved. In addition, suppressing the drawing-in of low pressure during startup at a low outside air temperature enables deterioration in the operating efficiency to be suppressed, and hence enables energy savings to be improved.

Further, in Embodiment 1, the controller 50 calculates the target value Tdm for the discharge temperature of the refrigerant to be discharged from the compressor 1 after the operating capacity of the compressor 1 is changed based on the predicted value Tc*, the predicted value Te*, and the compressor capacity VP. In addition, the controller 50 calculates the Td correction opening degree ΔLPtd, and corrects the opening degree to be set for the expansion valve 3 based on the difference between the actual measured value of the discharge temperature Td and the target value Tdm.

As a result, an excessive increase in the discharge temperature at the compressor 1 can be suppressed, and highly efficient operation can be realized within the permitted operating range of the compressor 1, allowing device reliability to be improved.

Further, in Embodiment 1, when the target value Tdm for the discharge temperature is more than the discharge temperature maximum permitted value Tdmax, the controller 50 corrects the opening degree to be set for the expansion valve 3 based on the difference between the discharge temperature maximum permitted value Tdmax and the target value Tdm.

As a result, when the target value Tdm for the discharge temperature calculated using the predicted value Te* and the predicted value Tc* is a higher temperature than that of the permitted operating range of the compressor 1, by making correction in advance so that the opening degree of the expansion valve 3 is increased, the startup operation can be performed within the permitted operating range because of a wet suction operation of the compressor 1.

<Modified Example>

Note that, in the embodiment described above, the base opening degree calculation (S101), low-pressure correction control (S103), and Td correction control (S106) are performed as the control operation for setting the opening degree of the expansion valve 3. However, the present invention is not limited to this embodiment. The control may be performed by executing an arbitrary one or two of the base opening degree calculation, low-pressure correction control, and Td correction control.

For example, in Fig. 2, the opening degree of the expansion valve 3 may be set by omitting Step S102 to Step S104, and just calculating the base opening degree and performing the Td correction control. Further, for example, in Fig. 2, the opening degree of the expansion valve 3 may be set by omitting Step S105 and Step S106, and just calculating the base opening degree and performing the low-pressure correction control. Still further, for example, in Fig. 2, the opening degree of the expansion valve 3 may be set by omitting Step S102 to Step S107, and just calculating the base opening degree. Still even further, for example, in Fig. 2, the opening degree of the expansion valve 3 may be corrected by omitting Step S101, setting the base opening degree to an arbitrary opening degree, and then performing the low-pressure correction control and the low-pressure correction control.

Reference Signs List

1 compressor 2 outdoor heat exchanger 3 expansion valve 5 liquid pipe 6 indoor heat exchanger 7 gas pipe 8 four-way valve 20 refrigerant circuit 31 outdoor fan 32 indoor fan 41 discharge temperature sensor 42 discharge pressure sensor 43 suction pressure sensor 44 outdoor temperature sensor 45 indoor temperature sensor 50 controller 61 outdoor unit 62 indoor unit 100 refrigeration cycle apparatus

**Claims**

1. A refrigeration cycle apparatus (100) for circulating refrigerant through a circuit in which a compressor (1) having a changeable operating capacity, a condensor (6), an expansion valve (3) having a changeable opening degree, and an evaporator (2) are connected to each other by pipes (7, 8), the refrigeration cycle apparatus (100) comprising:

   a first temperature sensor for detecting a temperature of a heat medium to be subjected to heat exchange with the refrigerant in the condensor (6);
   a second temperature sensor for detecting a temperature of a heat medium to be subjected to heat exchange with the refrigerant in the evaporator (2); and
   a controller (50) configured to control the operating capacity of the compressor (1) and the opening degree of the expansion valve (3),
   **characterized in that**:

      the controller (50) being configured to, when starting the compressor (1) or when changing the operating capacity of the compressor (1):

         calculate a predicted value (Tc*) of a condensing temperature of the refrigerant, and a predicted value (Te*) of an evaporating temperature of the refrigerant, being predicted after the compressor (1) is started or after the operating capacity of the compressor (1) is changed, based on a detection value of the first temperature sensor, a detection value of the second temperature sensor, and a setting value (VP) of the operating capacity to be set for the compressor (1) and
         determine a base opening degree (LPbase) to be set for the expansion valve (3) based on the predicted value (Tc*) of the condensing temperature, the predicted value (Te*) of the evaporating temperature, the setting value (VP) of the operating capacity to be set for the compressor (1), and an assumption that the refrigerant at an inlet of the expansion valve (3) is in a liquid state,

      wherein the controller is configured to correct the opening degree of the expansion valve when an actual measured value of current evaporating temperature is less than a value obtained by subtracting a first predetermined temperature from the predicted value (Te*) of the evaporating temperature, or
      the controller is configured to correct the opening degree of the expansion valve

         (i) when the actual measured value of the current evaporating temperature is larger than a value obtained by subtracting a second predetermined temperature from the predicted value (Te*) of the evaporating temperature or

(ii) when an absolute value of a difference between the opening degree of the expansion valve (3) and the base opening degree (LPbase) is less than a predetermined ratio of the base opening degree.

2. The refrigeration cycle apparatus (100) of claim 1, wherein the controller (50) is configured to, when an actual measured value of the evaporating temperature in the evaporator (2) is less than a predicted value (Te*) of the evaporating temperature,
calculate a predicted value ($\Delta$P*) of a pressure difference between a condensing pressure of the condensor (6) and an evaporating pressure of the evaporator (2) based on a predicted value (Tc*) of the condensing temperature and the predicted value (Te*) of the evaporating temperature and
correct the opening degree to be set for the expansion valve (3) based on an actual measured value ($\Delta$P) of the pressure difference between the condensing pressure of the condensor (6) and the evaporating pressure of the evaporator (2) and on the predicted value ($\Delta$P*) of the pressure difference.

3. The refrigeration cycle apparatus (100) of claim 1 or 2, further comprising a third temperature sensor (41) for detecting a discharge temperature of the refrigerant discharged from the compressor (1),
wherein the controller (50) is configured to

calculate a target value (Tdm) for the discharge temperature of the refrigerant to be discharged from the compressor (1) based on a predicted value (Tc*) of the condensing temperature, the predicted value (Te*) of the evaporating temperature, and the setting value (VP) of the operating capacity to be set for the compressor (1) and
correct the opening degree to be set for the expansion valve (3) based on a difference between a detection value of the third temperature sensor (41) and the target value (Tdm) for the discharge temperature.

4. The refrigeration cycle apparatus (100) of any one of claims 1 to 3, wherein the controller (50) is configured to
calculate a target value (Tdm) for a discharge temperature of the refrigerant to be discharged from the compressor (1) based on a predicted value (Tc*) of the condensing temperature, the predicted value (Te*) of the evaporating temperature, and the setting value (VP) of the operating capacity to be set for the compressor (1) and
correct, when the target value (Tdm) for the discharge temperature is more than a maximum value set in advance, the opening degree to be set for the expansion valve (3) based on a difference between the maximum value and the target value (Tdm) for the discharge temperature.

5. The refrigeration cycle apparatus (100) of any one of claims 1 to 4, wherein the refrigerant has a higher ratio of specific heat than R410A.

6. A method of controlling a refrigeration cycle apparatus (100) for circulating refrigerant through a circuit in which a compressor (1) having a changeable operating capacity, a condensor (6), an expansion valve (3) having a changeable opening degree, and an evaporator (2) are connected to each other by pipes (7, 8), the method comprising, when the compressor (1) is started or when the operating capacity of the compressor (1) is changed:

a step of acquiring a setting value (VP) of the operating capacity to be set for the compressor (1);
a first temperature detection step of detecting a temperature of a heat medium to be subjected to heat exchange with the refrigerant in the condensor (6);
a second temperature detection step of detecting a temperature of a heat medium to be subjected to heat exchange with the refrigerant in the evaporator (2);
a step of calculating a predicted value (Tc*) of a condensing temperature of the refrigerant, and a predicted value (Te*) of an evaporating temperature of the refrigerant, being predicted after the compressor (1) is started or after the operating capacity of the compressor (1) is changed, based on a detection value acquired in the first temperature detection step, a detection value acquired in the second temperature detection step, and the setting value (VP) of the operating capacity to be set for the compressor (1);
a step of determining a base opening degree (LPbase) to be set for the expansion valve (3) based on the predicted value (Tc*) of the condensing temperature, the predicted value (Te*) of the evaporating temperature, the setting value (VP) of the operating capacity to be set for the compressor (1), and an assumption that the refrigerant at an inlet of the expansion valve (3) is in a liquid state; and
a step of correcting the opening degree of the expansion valve when an actual measured value of current evaporating temperature is less than a value obtained by subtracting a first predetermined temperature from the predicted value (Te*) of the evaporating temperature, or
a step of correcting the opening degree of the expansion valve

(i) when the actual measured value of the current evaporating temperature larger than a value obtained by subtracting a second predetermined temperature from the predicted value (Te*) of the evaporating temperature or

(ii) when an absolute value of a difference between the opening degree of the expansion valve (3) and the base opening degree (LPbase) is less than a predetermined ratio of the base opening degree.

**Patentansprüche**

1. Kühlkreislaufvorrichtung (100) zum Zirkulieren von Kühlmittel durch einen Kreislauf, in dem ein Kompressor (1), der eine änderbare Betriebskapazität aufweist, ein Kondensator (6), ein Expansionsventil (3), das einen änderbaren Öffnungsgrad aufweist, und ein Verdampfer (2) miteinander durch Rohre (7, 8) verbunden sind, wobei die Kühlkreislaufvorrichtung (100) Folgendes umfasst:

einen ersten Temperatursensor zum Detektieren einer Temperatur eines Wärmemediums, das einem Wärmeaustausch mit dem Kühlmittel in dem Kondensator (6) unterzogen werden soll;
einen zweiten Temperatursensor zum Detektieren einer Temperatur eines Wärmemediums, das einem Wärmeaustausch mit dem Kühlmittel in dem Verdampfer (2) unterzogen werden soll; und
eine Steuervorrichtung (50), die ausgelegt ist, um die Betriebskapazität des Kompressors (1) und den Öffnungsgrad des Expansionsventils (3) zu steuern,
**dadurch gekennzeichnet, dass**:
die Steuervorrichtung (50) ausgelegt ist, um, wenn der Kompressor (1) gestartet wird oder die Betriebskapazität des Kompressors (1) geändert wird:

einen vorhergesagten Wert (Tc*) einer Kondensationstemperatur des Kühlmittels und einen vorhergesagten Wert (Te*) einer Verdampfungstemperatur des Kühlmittels zu berechnen, die vorhergesagt werden, nachdem der Kompressor (1) gestartet wurde oder nachdem die Betriebskapazität des Kompressors (1) geändert wurde, auf Grundlage eines Detektionswerts des ersten Temperatursensors, eines Detektionswerts des zweiten Temperatursensors und eines Einstellwerts (VP) der Betriebskapazität, die für den Kompressor (1) festzulegen sind, und
einen Grundöffnungsgrad (LPbase) zu bestimmen, der für das Expansionsventil (3) auf Grundlage des vorhergesagten Werts (Tc*) der Kondensationstemperatur, dem vorhergesagten Wert (Te*) der Verdampfungstemperatur, dem Einstellwert (VP) der Betriebskapazität, die für den Kompressor (1) festzulegen ist, und einer Annahme, dass das Kühlmittel an einem Einlass des Expansionsventils (3) sich in einem flüssigen Zustand befindet, einzustellen ist,

wobei die Steuervorrichtung ausgelegt ist, um den Öffnungsgrad des Expansionsventils zu korrigieren, wenn ein tatsächlicher Messwert der aktuellen Verdampfungstemperatur geringer ist als ein Wert, der durch Subtrahieren einer ersten vorbestimmten Temperatur von dem vorhergesagten Wert (Te*) der Verdampfungstemperatur erhalten wird, oder
die Steuervorrichtung ausgelegt ist, um den Öffnungsgrad des Expansionsventils zu korrigieren,

(i) wenn der tatsächliche Messwert der aktuellen Verdampfungstemperatur höher ist als ein Wert, der durch Subtrahieren einer zweiten vorbestimmten Temperatur von dem vorhergesagten Wert (Te*) der Verdampfungstemperatur erhalten wird, oder
(ii) wenn ein Absolutwert einer Differenz zwischen dem Öffnungsgrad des Expansionsventils (3) und dem Grundöffnungsgrad (LPbase) geringer ist als ein vorbestimmter Anteil des Grundöffnungsgrades.

2. Kühlkreislaufvorrichtung (100) nach Anspruch 1, wobei die Steuervorrichtung (50) ausgelegt ist, um, wenn ein tatsächlicher Messwert der Verdampfungstemperatur in dem Verdampfer (2) geringer ist als ein vorhergesagter Wert (Te*) der Verdampfungstemperatur,
einen vorhergesagten Wert (ΔP*) einer Druckdifferenz zwischen einem Kondensationsdruck des Kondensators (6) und einem Verdampfungsdruck des Verdampfers (2) auf Grundlage eines vorhergesagten Werts (Tc*) der Kondensationstemperatur und dem vorhergesagten Wert (Te*) der Verdampfungstemperatur zu berechnen und
den Öffnungsgrad zu korrigieren, der für das Expansionsventil (3) auf Grundlage eines tatsächlichen Messwerts (ΔP) der Druckdifferenz zwischen dem Kondensationsdruck des Kondensators (6) und dem Verdampfungsdruck des Verdampfers (2) und des vorhergesagten Werts (ΔP*) der Druckdifferenz festzulegen ist.

3. Kühlkreislaufvorrichtung (100) nach Anspruch 1 oder 2, die ferner einen dritten Temperatursensor (41) zum Detektieren einer Ausgabetemperatur des aus dem Kompressor (1) ausgegebenen Kühlmittels umfasst, wobei die Steuervorrichtung (50) ausgelegt ist, um

einen Zielwert (Tdm) für die Ausgabetemperatur des aus dem Kompressor (1) auszugebenden Kühlmittels auf Grundlage eines vorhergesagten Werts (Tc*) der Kondensationstemperatur, des vorhergesagten Werts (Te*) der Verdampfungstemperatur und des Einstellwerts (VP) der Betriebskapazität, die für den Kompressor (1) festzulegen ist, zu berechnen und

den Öffnungsgrad zu korrigieren, der für das Expansionsausmaß (3) festzulegen ist, auf Grundlage einer Differenz zwischen einem Detektionswert des dritten Temperatursensors (41) und dem Zielwert (Tdm) für die Abgabetemperatur.

4. Kühlkreislaufvorrichtung (100) nach einem der Ansprüche 1 bis 3, wobei die Steuervorrichtung (50) ausgelegt ist, um einen Zielwert (Tdm) für eine Abgabetemperatur des Kühlmittels, das aus dem Kompressor (1) abzugeben ist, auf Grundlage eines vorhergesagten Werts (Tc*) der Kondensationstemperatur, des vorhergesagten Werts (Te*) der Verdampfungstemperatur und des Einstellwerts (VP) der Betriebskapazität zu berechnen, der für den Kompressor (1) festzulegen ist, und

wenn der Zielwert (Tdm) für die Abgabetemperatur höher als ein vorab festgelegter Maximalwert ist, den Öffnungsgrad zu korrigieren, der für das Expansionsventil (3) festzulegen ist, auf Grundlage einer Differenz zwischen dem Maximalwert und dem Zielwert (Tdm) für die Abgabetemperatur.

5. Kühlkreislaufvorrichtung (100) nach einem der Ansprüche 1 bis 4, wobei das Kühlmittel einen höheren Anteil an spezifischer Wärme als R410A aufweist.

6. Verfahren zum Steuern einer Kühlkreislaufvorrichtung (100) zum Zirkulieren von Kühlmittel durch einen Kreislauf, in dem ein Kompressor (1), der eine änderbare Betriebskapazität aufweist, ein Kondensator (6), ein Expansionsventil (3), das einen änderbaren Öffnungsgrad aufweist, und ein Verdampfer (2) miteinander durch Rohre (7, 8) verbunden sind, wobei das Verfahren Folgendes umfasst, wenn der Kompressor (1) gestartet wird oder wenn die Betriebskapazität des Kompressors (1) geändert wird:

einen Schritt des Erfassens eines Einstellwerts (VP) der Betriebskapazität, die für den Kompressor (1) festzulegen ist;

einen ersten Temperaturdetektionsschritt des Detektierens einer Temperatur eines Wärmemediums, das einem Wärmeaustausch mit dem Kühlmittel in dem Kondensator (6) unterzogen werden soll;

einen zweiten Temperaturdetektionsschritt des Detektierens einer Temperatur eines Wärmemediums, das einem Wärmeaustausch mit dem Kühlmittel in dem Verdampfer (2) unterzogen werden soll;

einen Schritt des Berechnens eines vorhergesagten Werts (Tc*) einer Kondensationstemperatur des Kühlmittels und eines vorhergesagten Werts (Te*) einer Verdampfungstemperatur des Kühlmittels, die vorhergesagt werden, nachdem der Kompressor (1) gestartet wurde oder nachdem die Betriebskapazität des Kompressors (1) geändert wurde, auf Grundlage eines Detektionswerts des ersten Temperatursensors, eines Detektionswerts des zweiten Temperatursensors und eines Einstellwerts (VP) der Betriebskapazität, die für den Kompressor (1) festzulegen sind, und

einen Schritt des Bestimmens eines Grundöffnungsgrades (LPbase), der für das Expansionsventil (3) auf Grundlage des vorhergesagten Werts (Tc*) der Kondensationstemperatur, dem vorhergesagten Wert (Te*) der Verdampfungstemperatur, dem Einstellwert (VP) der Betriebskapazität, die für den Kompressor (1) festzulegen ist, und einer Annahme, dass das Kühlmittel an einem Einlass des Expansionsventils (3) sich in einem flüssigen Zustand befindet, einzustellen ist, und

einen Schritt des Korrigierens des Öffnungsgrades des Expansionsventils, wenn ein tatsächlicher Messwert der aktuellen Verdampfungstemperatur geringer ist als ein Wert, der durch das Subtrahieren einer ersten vorbestimmten Temperatur von dem vorhergesagten Wert (Te*) der Verdampfungstemperatur erhalten wird, oder

einen Schritt des Korrigierens eines Öffnungsgrades des Expansionsventils

(i) wenn der tatsächliche Messwert der aktuellen Verdampfungstemperatur höher ist als ein Wert, der durch Subtrahieren einer zweiten vorbestimmten Temperatur von dem vorhergesagten Wert (Te*) der Verdampfungstemperatur erhalten wird, oder

(ii) wenn ein Absolutwert einer Differenz zwischen dem Öffnungsgrad des Expansionsventils (3) und dem Grundöffnungsgrad (LPbase) geringer ist als ein vorbestimmter Anteil des Grundöffnungsgrades.

**Revendications**

1. Appareil à cycle frigorifique (100) destiné à faire circuler un fluide frigorigène à travers un circuit dans lequel un compresseur (1) présentant une capacité de fonctionnement variable, un condenseur (6), un détendeur (3) présentant un degré d'ouverture variable, et un évaporateur (2) sont reliés entre eux par des tuyaux (7, 8), l'appareil à cycle frigorifique (100) comprenant :

   un premier capteur de température destiné à détecter une température d'un fluide caloporteur devant être soumis à un échange de chaleur avec le fluide frigorigène dans le condenseur (6) ;
   un deuxième capteur de température destiné à détecter une température d'un fluide caloporteur devant être soumis à un échange de chaleur avec le fluide frigorigène dans l'évaporateur (2) ; et
   un régulateur (50) configuré de manière à réguler la capacité de fonctionnement du compresseur (1) et le degré d'ouverture du détendeur (3) ;
   **caractérisé en ce que** :
   le régulateur (50) est configuré de manière à, lors du démarrage du compresseur (1) ou lors de la modification de la capacité de fonctionnement du compresseur (1) :

      calculer une valeur prédite (Tc*) d'une température de condensation du fluide frigorigène, et une valeur prédite (Te*) d'une température d'évaporation du fluide frigorigène, lesquelles sont prédites après le démarrage du compresseur (1) ou après la modification de la capacité de fonctionnement du compresseur (1), sur la base d'une valeur de détection du premier capteur de température, d'une valeur de détection du deuxième capteur de température, et d'une valeur de réglage (VP) de la capacité de fonctionnement à régler pour le compresseur (1) ; et
      déterminer un degré d'ouverture de base (LPbase) à régler pour le détendeur (3) sur la base de la valeur prédite (Tc*) de la température de condensation, de la valeur prédite (Te*) de la température d'évaporation, de la valeur de réglage (VP) de la capacité de fonctionnement à régler pour le compresseur (1), et d'une hypothèse selon laquelle le fluide frigorigène, au niveau d'une entrée du détendeur (3), est à l'état liquide ;

   dans lequel le régulateur est configuré de manière à corriger le degré d'ouverture du détendeur lorsqu'une valeur mesurée réelle de la température d'évaporation en cours est inférieure à une valeur obtenue en soustrayant une première température prédéterminée de la valeur prédite (Te*) de la température d'évaporation ; ou
   dans lequel le régulateur est configuré de manière à corriger le degré d'ouverture du détendeur :

      (i) lorsque la valeur mesurée réelle de la température d'évaporation en cours est supérieure à une valeur obtenue en soustrayant une seconde température prédéterminée de la valeur prédite (Te*) de la température d'évaporation ; ou
      (ii) lorsqu'une valeur absolue d'une différence entre le degré d'ouverture du détendeur (3) et le degré d'ouverture de base (LPbase) est inférieure à un rapport prédéterminé du degré d'ouverture de base.

2. Appareil à cycle frigorifique (100) selon la revendication 1, dans lequel le régulateur (50) est configuré de manière à, lorsqu'une valeur mesurée réelle de la température d'évaporation dans l'évaporateur (2) est inférieure à une valeur prédite (Te*) de la température d'évaporation :

   calculer une valeur prédite ($\Delta$P*) d'une différence de pression entre une pression de condensation du condenseur (6) et une pression d'évaporation de l'évaporateur (2), sur la base d'une valeur prédite (Tc*) de la température de condensation et de la valeur prédite (Te*) de la température d'évaporation, et
   corriger le degré d'ouverture à régler pour le détendeur (3) sur la base d'une valeur mesurée réelle ($\Delta$P) de la différence de pression entre la pression de condensation du condenseur (6) et la pression d'évaporation de l'évaporateur (2) et de la valeur prédite ($\Delta$P*) de la différence de pression.

3. Appareil à cycle frigorifique (100) selon la revendication 1 ou 2, comprenant en outre un troisième capteur de température (41) destiné à détecter une température de refoulement du fluide frigorigène évacué du compresseur (1) ;
   dans lequel le régulateur (50) est configuré de manière à :

   calculer une valeur cible (Tdm) pour la température de refoulement du fluide frigorigène à évacuer du compresseur (1), sur la base d'une valeur prédite (Tc*) de la température de condensation, de la valeur prédite (Te*) de la température d'évaporation et de la valeur de réglage (VP) de la capacité de fonctionnement à régler pour le compresseur (1) ; et

corriger le degré d'ouverture à régler pour le détendeur (3), sur la base d'une différence entre une valeur de détection du troisième capteur de température (41) et la valeur cible (Tdm) pour la température de refoulement.

4. Appareil à cycle frigorifique (100) selon l'une quelconque des revendications 1 à 3, dans lequel le régulateur (50) est configuré de manière à :

calculer une valeur cible (Tdm) pour une température de refoulement du fluide frigorigène à évacuer à partir du compresseur (1), sur la base d'une valeur prédite (Tc*) de la température de condensation, de la valeur prédite (Te*) de la température d'évaporation, et de la valeur de réglage (VP) de la capacité de fonctionnement à régler pour le compresseur (1) ; et

corriger, lorsque la valeur cible (Tdm) pour la température de refoulement est supérieure à une valeur maximale réglée à l'avance, le degré d'ouverture à régler pour le détendeur (3), sur la base d'une différence entre la valeur maximale et la valeur cible (Tdm) pour la température de refoulement.

5. Appareil à cycle frigorifique (100) selon l'une quelconque des revendications 1 à 4, dans lequel le fluide frigorigène présente un rapport de chaleur spécifique supérieur à celui du fluide frigorigène R410A.

6. Procédé de régulation d'un appareil à cycle frigorifique (100) pour faire circuler un fluide frigorigène à travers un circuit dans lequel un compresseur (1) présentant une capacité de fonctionnement variable, un condenseur (6), un détendeur (3) présentant un degré d'ouverture variable et un évaporateur (2), sont reliés les uns aux autres par des tuyaux (7, 8), le procédé comprenant, lorsque le compresseur (1) est démarré ou lorsque la capacité de fonctionnement du compresseur (1) est modifiée :

une étape consistant à acquérir une valeur de réglage (VP) de la capacité de fonctionnement à régler pour le compresseur (1) ;

une première étape de détection de température consistant à détecter une température d'un fluide caloporteur devant être soumis à un échange de chaleur avec le fluide frigorigène dans le condenseur (6) ;

une seconde étape de détection de température consistant à détecter une température d'un fluide caloporteur devant être soumis à un échange de chaleur avec le fluide frigorigène dans l'évaporateur (2) ;

une étape consiste à calculer une valeur prédite (Tc*) d'une température de condensation du fluide frigorigène, et une valeur prédite (Te*) d'une température d'évaporation du fluide frigorigène, lesquelles sont prédites après le démarrage du compresseur (1) ou après la modification de la capacité de fonctionnement du compresseur (1), sur la base d'une valeur de détection acquise à la première étape de détection de température, d'une valeur de détection acquise à la seconde étape de détection de température, et de la valeur de réglage (VP) de la capacité de fonctionnement à régler pour le compresseur (1) ;

une étape consistant à déterminer un degré d'ouverture de base (LPbase) à régler pour le détendeur (3) sur la base de la valeur prédite (Tc*) de la température de condensation, de la valeur prédite (Te*) de la température d'évaporation, de la valeur de réglage (VP) de la capacité de fonctionnement à régler pour le compresseur (1), et d'une hypothèse selon laquelle le fluide frigorigène, au niveau d'une entrée du détendeur (3), est à l'état liquide ; et

une étape consistant à corriger le degré d'ouverture du détendeur lorsqu'une valeur mesurée réelle de la température d'évaporation en cours est inférieure à une valeur obtenue en soustrayant une première température prédéterminée de la valeur prédite (Te*) de la température d'évaporation ; ou

une étape consistant à corriger le degré d'ouverture du détendeur :

(i) lorsque la valeur mesurée réelle de la température d'évaporation en cours est supérieure à une valeur obtenue en soustrayant une seconde température prédéterminée de la valeur prédite (Te*) de la température d'évaporation ; ou

(ii) lorsqu'une valeur absolue d'une différence entre le degré d'ouverture du détendeur (3) et le degré d'ouverture de base (LPbase) est inférieure à un rapport prédéterminé du degré d'ouverture de base.

F I G. 1

FIG. 2

```
                    ( START )
                        │
S101    ┌───────────────────────────┐
        │   CALCULATE BASE          │
        │   OPENING DEGREE          │
        │   (LPbase)                │
        └───────────────────────────┘
                        │
S102         < Te < Te* - 5°C >─────── No
                        │                │
                       Yes          ┌──────────┐
                        │           │ ΔLPte = 0 │  S104
S103    ┌───────────────────────────┐└──────────┘
        │ PERFORM LOW-PRESSURE      │      │
        │ CORRECTION CONTROL        │      │
        │ (ΔLPte)                   │      │
        └───────────────────────────┘      │
                        │◄─────────────────┘
                        │
S105    < Te > Te* - 3°C  or            >───── No
        < |LP - LPbase| < LPbase × 30% >        │
                        │                        │
                       Yes                       │
                        │                        │
S106    ┌───────────────────────────┐           │
        │ PERFORM Td CORRECTION     │           │
        │ CONTROL (ΔLPtd)           │           │
        └───────────────────────────┘           │
                        │◄──────────────────────┘
                        │
S107    ┌───────────────────────────┐
        │ ΔLPho = ΔLPho + ΔLPtd + ΔLPte │
        │ (INITIAL VALUE ΔLPho = 0) │
        └───────────────────────────┘
                        │
S108    ┌───────────────────────────┐
        │ LP = LPbase + ΔLPho       │
        └───────────────────────────┘
                        │
                   ( RETURN )
```

FIG. 3

FIG. 4

F I G .  5

```
                          ┌──────────┐
                          │  START   │
                          └────┬─────┘
                               │
                          ╱────┴─────╲                    HEATING
            S201       ╱   COOLING    ╲                  OPERATION
                     ╱  OPERATION OR HEATING ╲──────────────────────┐
                      ╲    OPERATION?       ╱                       │
                        ╲────┬──────╱                               │
                   COOLING   │                                      │
                  OPERATION  │                                      │
            S202    ┌────────┴─────────┐        ┌──────────────────┐│ S203
                    │ Tae = Tr, Tac = AT│        │ Tae = AT, Tac = Tr│
                    └────────┬─────────┘        └──────────────────┘
                             │◄──────────────────────────────────────┘
```

S204 — READ CONTROL INSTRUCTION VALUE OF COMPRESSOR FREQUENCY f [Hz]

S205 — $VP = f \times Vst$

S206 — CALCULATE $\Delta Te$ AND $\Delta Tc$

S207 — $Te^* = Tae - \Delta Te, \; Tc^* = Tac + \Delta Tc$

S208 — $Cv\_b = fCv \, (Tc^*, Te^*, VP)$

S209 — $Tdm = fTdm \, (Tc^*, Te^*, VP)$

S210 — $Tdm > Tdmax$    No

Yes

S211 — $\Delta Cvtd = fCvTd \, (Tdm - Tdmax)$     $\Delta Cvtd = 0$   S212

S213 — $LPbase = fLEV \, (Cv\_b + \Delta Cvtd)$

```
                          ┌──────────┐
                          │  RETURN  │
                          └──────────┘
```

FIG. 6

P[MPa]

$$Cvte = Cv \times \frac{\rho_s{}^* / \rho_s}{\sqrt{\Delta P^* / \Delta P}}$$

Tc*

Tc

Cvte ⊗

⊗ Cv

Te*

Te

H[kJ/kg]

FIG. 7

START

S301  $\Delta P^* = fPsat(Tc^*) - fPsat(Te^*)$

S302  $\Delta P = fPsat(Tc) - fPsat(Te)$

S303  $\rho s^* = f \rho s(Te^*)$

S304  $\rho s = f \rho s(Te)$

S305  $Cv = fLEVCv(LP)$

S306  $Cvte = Cv \times \dfrac{\rho_s{}^* / \rho_s}{\sqrt{\Delta P^* / \Delta P}}$

S307  $\Delta LPte = fLEV(Cvte) - fLEV(Cv)$

RETURN

FIG. 8

START

S401    $Tdm = fTdm(Tc*, Te*, VP)$

S402    $\Delta Cvtd = fCvTd(Td - Tdm)$

S403    $\Delta LPtd = fLEV(Cv + \Delta Cvtd) - fLEV(Cv)$

RETURN

F I G. 9

LEV (OPENING DEGREE)
LP [pulse]

LOW-PRESSURE
CORRECTION
OPENING DEGREE
ΔLPte

Td CORRECTION OPENING
DEGREE ΔLPtd

BASE OPENING DEGREE (∝VP)

STARTUP OPENING DEGREE (∝VP)

TIME [min]

COMPRESSOR
CAPACITY VP
[cc x Hz]

TIME [min]

EVAPORATING
TEMPERATURE Te
[°C]

ACTUAL MEASURED VALUE Te

PREDICTED VALUE Te*

TIME [min]

DISCHARGE
TEMPERATURE Td
[°C]

Tdm

ACTUAL MEASURED VALUE

TIME [min]

DEGREE OF
SUBCOOLING SC
[K]

TIME [min]

29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003106683 A
- JP 3208923 B
- JP 5022920 B
- JP HEI11153366 B
- JP 2000337717 A